# EUROPEAN PATENT APPLICATION

(11) **EP 1 128 703 A1**
(43) Date of publication of application: **29.08.2001**
(21) Application number: 01301202.6
(22) Date of filing: 12.02.2001
(51) Int. Cl.: H04Q 11/04, H04Q 7/30

(54) **System and method for enhancing uplink traffic capacity for a soft hand off**

(30) Priority: 22.02.2000 US 510199
(71) Applicant: LUCENT TECHNOLOGIES INC., Murray Hill, New Jersey 07974-0636 (US)
(72) Inventor: Sriram, Kotikalapudi, Marlboro, Monmouth (US); Monin, Jeffrey, North Caldwell, Essex (US); Park, Se-Yong, Randolph, Morris (US); Baldwin, John Henry, Morristown, Morris (US)
(74) Representative: Buckley, Christopher Simon Thirsk

(57) **Abstract**

A system and method for a soft-handoff uses data packets and reduces the requisite communications capacity between the mobile switching center and the base station controller. For the reverse link, the base station controller determines the best frame or data packets from a mobile station in a soft-handoff. Accordingly, only the best data packet, as opposed to data packets from all of the base stations participating in the handoff, is transmitted on the reverse link between the base station controller and mobile switching center.

## Description

### FIELD OF INVENTION

This invention relates generally to wireless communication systems and more particularly toward a system and method for enhancing inter-site reverse traffic capacity for a soft hand-off.

### BACKGROUND

A spread-spectrum system, such as a code-division multiple access (CDMA) system, typically supports a soft hand-off. During a soft hand-off of the mobile station from one coverage area (e.g., sector) to another, multiple versions of similar signals may be transmitted between the mobile switching center on both the reverse path and the forward path. In the context of the reverse transmissions, the mobile station may transmit the reverse channel to multiple base stations participating in the soft hand-off. The reverse channel propagates over different propagational paths between each base station and the mobile station in the soft hand-off. The base stations cooperate with the base station controller to forward the different versions of the received reverse channel to the mobile switching center over communication lines between the mobile switching center and the base station controller. The mobile switching center analyzes the different versions may select the best version for forwarding to the other party communicating with the mobile station.

The base station controller and the mobile switching center are interconnected by communications links or lines, such as El's or T1's. In practice, for a wireless communication system with a few hundred thousand subscribers, the communication lines between the mobile switching center and the base station controller may require one or more E3 capacity links or T3 capacity links to meet anticipated maximum traffic load requirements; particularly, where many subscribers are engaged in a soft hand-off at the same time. The communications links or lines may extend over long distances because the mobile switching center and the base station controller may be located at different sites that are separated by many kilometers, for example.

In some cases, the service provider may require considerable expenditures for leasing, installing, purchasing, and maintaining communications lines, high-capacity microwave equipment, or fiber optic equipment to provide adequate communications capacity between the mobile switching center and the base station controller. In other cases, the service provider may not have sufficient interconnect capacity between base station controller and the mobile switching center to handle duplicate voice channels for the soft hand-off, so calls may be blocked, leading to lost revenue and potentially the loss of customers.

Thus, a need exists for enhancing the efficiency of inter-site communications between a base station controller and the mobile switching center in a wireless system to reduce expenditures for communications lines and to provide reliable service to subscribers.

### SUMMARY OF THE INVENTION

In accordance with the invention, the system and method for a soft-handoff using data packets reduces the requisite communications capacity between the mobile switching center and the base station controller. For the reverse link, the base station controller determines the best frame or data packets from a mobile station in a soft-handoff.

Accordingly, only the best or preferred data packet, as opposed to data packets from all of the base stations participating in the handoff, is transmitted on the reverse link between the base station controller and mobile switching center. In practice, a sequence of best data packets is transmitted to the mobile switching center in the above manner.

### BRIEF DESCRIPTION OF THE DRAWINGS

In the specification and the following drawings, like reference numbers shall indicate like elements.

FIG. 1 is a block diagram of a wireless communications network in accordance with the invention.

FIG. 2 is a block diagram of a base station controller of FIG. 1.

FIG. 3 is a block diagram illustrating a reverse signal path through the wireless network of FIG. 1 to support a soft hand-off.

FIG. 4 is a flow chart of a method for facilitating reduction of a requisite reverse path capacity of the wireless communications network during a soft hand-off in accordance with the invention.

FIG.5A is a block diagram of a wireless communication network using a first consolidation scheme in accordance with the invention.

FIG. 5B is a chart illustrating the possible contents of a consolidating database for the first consolidation scheme of FIG. 5A.

FIG. 5C1- FIG. 5C3 are charts illustrating possible conversion data in the base stations for the first consolidation scheme of FIG. 5A.

FIG.6A is a block diagram of a wireless communication network using a second consolidation scheme in accordance with the invention.

FIG. 6B is a chart showing possible contents of a consolidating database for the second consolidation scheme of FIG. 6A.

FIG.7A is a block diagram of a wireless communication network using a third consolidation scheme in accordance with the invention.

FIG. 7B is a chart showing possible contents of a consolidating database for the third consolidation scheme of FIG. 7A.

FIG. 8 is a flow chart of a method for consolidating data packets for upstream soft hand-off traffic in accordance with the invention.

FIG. 9 is a block diagram of key components of the mobile switching center for supporting data packet communications of the invention.

FIG. 10 illustrates a data structure for data packets that may be used to practice the invention.

FIG. 11 illustrates a start field an asynchronous transfer mode cell in accordance with FIG. 10.

FIG. 12 illustrates the contents of an AAL2 header in accordance with FIG. 10.

### DETAILED DESCRIPTION

As used herein a traffic packet includes a voice packet and/or a data packet. A data packet refers to a packet with any informational content and data structure format, including a voice packet, a signaling packet, a control data packet, an internet protocol (IP) packet , an asynchronous transfer mode (ATM) packet, an adaptive layer type 2 (AAL2) packet, and adaptive layer type 5 (AAL5) packet,-a mini-packet, or the like.

Consolidation generally refers to selection or derivation of an outgoing nonduplicative data packet for each group of duplicative incoming data packets for a reverse path transmission of a soft hand-off. Notwithstanding the foregoing definition of consolidation, consolidation refers to any signal processing or error correction scheme at a base station controller, an asynchronous transfer mode switch, or another signaling node that may produce an outgoing preferential data packet from digital signal processing of a group of incoming duplicative data packets.

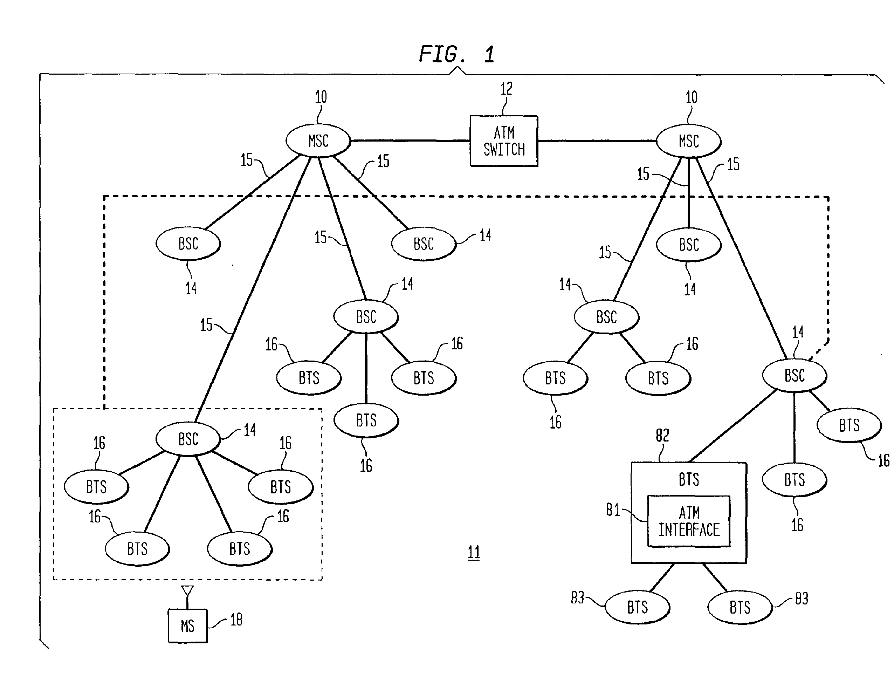

In accordance with the invention, FIG. 1 shows a block diagram of a wireless network 11. The wireless network 11 includes at least one mobile switching center (MSC) 10 that communicates with base station controllers (BSC) 14 over communication lines 15. The base station controllers 14 and the mobile switching centers 10 may be located at different sites, which may be separated by various distances (e.g., 25 Km). The base station controllers 14 communicate with one or more base stations (BTS) 16. Each group of base stations 16 and its corresponding base station controller 14 may be referred to as a base station subsystem 20.

As illustrated in FIG. 1 two or more mobile switching centers 10 may communicate to one another via an ATM switch 12 or via an ATM network. The mobile switching center 10 is capable of handling data packets for transmission and reception between the mobile switching center 10 and the base station controller 14. The communication line 15 refers to any type of point-to-point or point-to-multipoint communications infrastructure including a fiber optic link, an optical link, a microwave link, wireline equipment, pulse code modulation (PCM) equipment, a T1 link, an E1 link, a DS3 link, an STM-1 link, or otherwise. The communications line 15 has a maximum capacity which may be rated in terms of (Mbps) megabits per second, for example.

The wireless network 11 may feature base stations with daisy-chaining capability, without daisy-chaining capability, or both. A daisy-chaining capable base station 82 is one which includes an ATM interface 81 that routes soft hand-off data packets from one or more downstream base stations 83 to a base station controller 14 or an upstream base station.

During a soft hand-off, channel elements of different base stations 16 send duplicative packets associated with the reverse traffic generated by a mobile station 18. The ATM interface 81 detects the duplicative packets and forwards a selected packet, among the detected duplicative soft hand-off packets, to a base station controller 14. The ATM interface analyzes quality of the duplicative packets and selects the best quality of the received packets for transmission as a single selected packet, regardless of the number of different base stations 16.

The non-daisy-chaining capable base station 16 relies upon the base station controller 14 with an integral or adjunct packet switching unit to be a selection and transmission node for data packets.

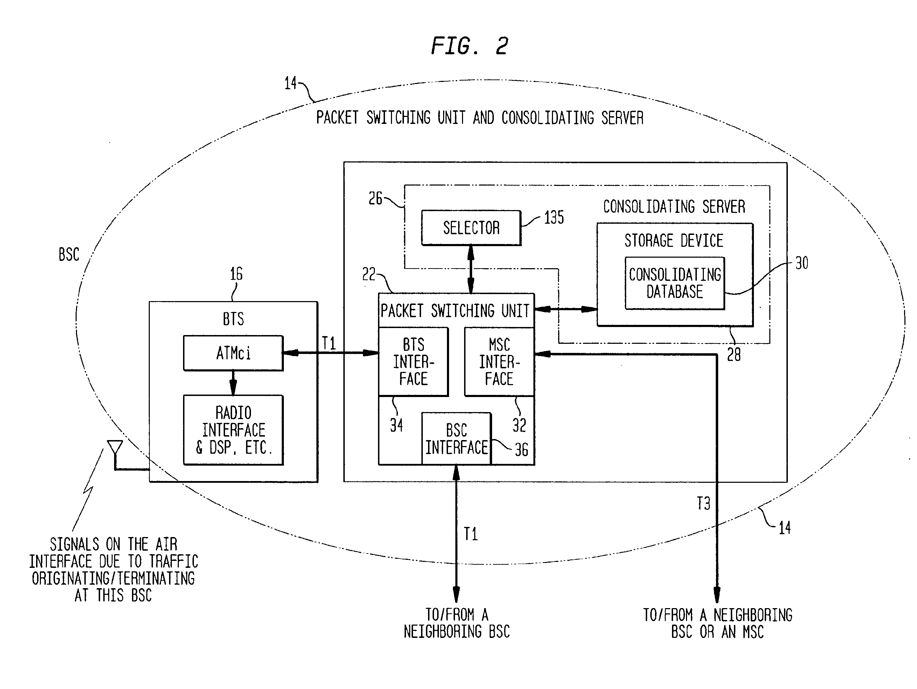

FIG. 2 is a block diagram that shows a base station controller 14 in more detail than FIG. 1. A base station controller 14 preferably includes a packet switching unit 22 coupled to a consolidating server 26. Although the base station controller 14 may contain an integral base station 16 as shown, the base station 16 may be located remotely from the base station controller 14 and still fall within the scope of the invention.

The packet switching unit 22 provides a first interface 32 to a mobile switching center 10 and a second interface 34 for one or more base stations 16 associated with the base station controller 14. The base station controller 14 controls channel assignment activity and other functions for its associated base stations 16. The packet switching unit 22 may provide a third interface 36 to one or more neighboring base station controllers 14 that neighbor the base station controller 14.

The consolidating server 26 includes a storage device 28 and a selector 135. The storage device 28 stores a consolidating database 30 for at least reverse path management between the mobile switching center 10 and the base station controller 14 and between the base station controller 14 and the one or more base stations 16. The consolidating database 30 may include records for forward link management as well as reverse link management. The selector 135 is only used for processing data packets on the reverse path between the base station 16 and the mobile switching center 10.

The consolidating database 30 preferably comprises a consolidating table organized by different active soft hand-offs. The consolidating database 30 may contain the following fields for each active soft hand-off: virtual path identifier (VPI), virtual channel identifier (VCI), and channel identifier (CID). A virtual path indicator refers to a transmission path through a packet network. The virtual path indicator may be used to identify routing or the reverse path from a channel element of the base station 16 to a mobile switching center 10. A virtual channel identifier refers to an address of a channel group of voice channels, data channels, or signaling channels of a particular base station 16. The channel identifier refers to a particular air interface channel within the channel group from a mobile station 18. For the reverse path, the channel identifier is associated with a corresponding speech handler, which is assigned to handle a reverse channel. The speech handler is a component of the mobile switching center 14.

A complete address for a data packet includes a virtual channel identifier, a virtual path identifier, and a channel identifier. The complete address may be stored in an ATM cell header, for example, to facilitate proper routing of data packets between the mobile switching center 10, the base station controller 14, and any base stations 16 participating in the soft hand-off. Groups of CID's and VCI, without the VPI may be sufficient to appropriately route data packets for soft hand-offs in wireless infrastructure networks without alternative path choices or without routing ambiguity between different packet switching units 22.

The BSC 14 preferably maintains a consolidating table for mapping incoming VPI, VCI, and CID combinations to outgoing VPI, VCI and CID combinations. As used herein in the reverse link context, incoming VPI, VCI, and CID combinations refer to codes or symbols originating from base stations 16. Incoming combinations are received on a downstream side of a BSC 14, or another network node. Outgoing VPI, VCI, and CID combinations refer to codes or symbols that are transmitted on the reverse signal path from a base station controller 14 or a similar node. Outgoing combinations are transmitted on an upstream side of the base station controller 14 to a mobile switching center 10. The BSC 14 has a map entry of incoming/outgoing combinations for each of the legs in the soft handoff. The consolidating server 26 may maintain and update information about virtual channel identifiers (VCI's) and virtual path identifiers (VPI's) for links going to neighboring BSC's 14 at neighboring sites from the BSC 14 in a neighbor-attributes table.

From the BTS 16 to the MSC 10, a virtual channel connection (VCC) has two distinct links to a virtual connection: (1) a first link between the BTS 16 and BSC 14 and (2) a second link between BSC 14 and the MSC 10. The virtual circuit identifier can be selected independently for the first link and the second link on a link-by-link basis by the BSC 14. Accordingly, more alternate routes may be available when the first link is independent from the second link. The consolidating table keeps an input/output map which maps corresponding virtual channel identifiers between the first link and the second link. In practice, CID's may be carried through the BSC 14 and are the same for the BTS-BSC link and the BSC-MSC link.

For a soft hand-off where daisy chaining between base stations is used, as few as one virtual path may be used with a single VPI. For a soft hand-off where no daisy-chaining is used for communication between base stations, the base station controller sets up separate virtual paths to each cell site involved in a soft hand-off. Accordingly, each leg of the soft hand-off may feature a separate corresponding VPI.

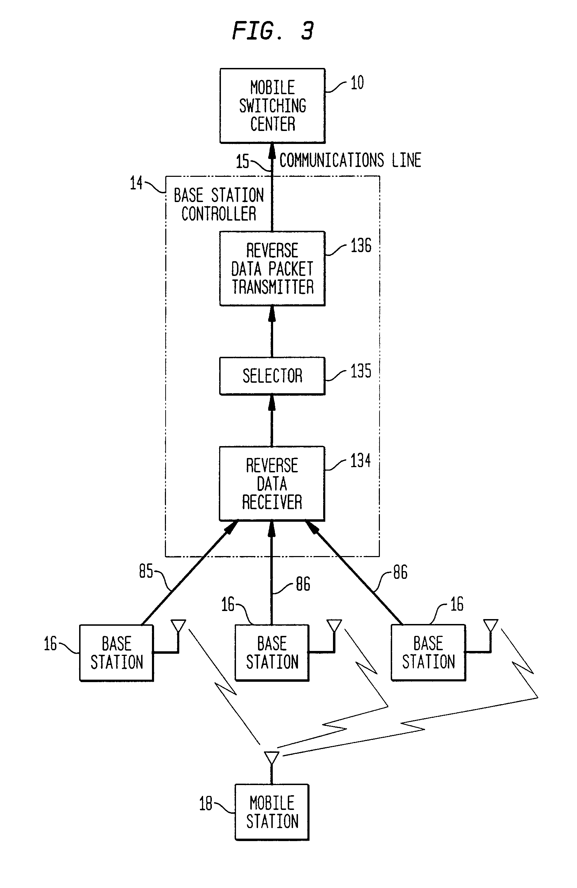

FIG. 3 illustrates a system for reducing requisite traffic capacity on a reverse component of the communication line 15 between the mobile switching center 10 and the base station controller 14. The base station controller 14 includes a reverse data packet receiver 134 coupled to a selector 135 (e.g., a frame pre-selector). In turn, the selector 135 is coupled to a reverse data packet transmitter 136.

Multiple base stations 16 participate in a soft hand-off by receiving a reverse link signal from a mobile station 18. The base stations 16 send incoming data packets to the reverse data receiver 134. The incoming data packets are transmitted over a primary leg 85 and one or more secondary legs 86 of the soft hand-off for the base stations 16 participating in the soft hand-off. The primary leg 85 and the second legs 86 represent any suitable type communication lines (e.g., E1 or DS1 lines) for carrying data packets. The multiple incoming data packets contain duplicative information from the reverse link transmission of the mobile station 18 during a soft-handoff. The transmitter 136 communicates nonduplicative, selected data packets to a mobile switching center 10 via the communication line 15 to conserve requisite communications capacity over the reverse path of the communications line 15.

The reverse data packet receiver 134 and the transmitter 136 are components of the packet switching unit 22. The selector 135 and a storage device 28, including the consolidating database 30, are components of the consolidating server 26.

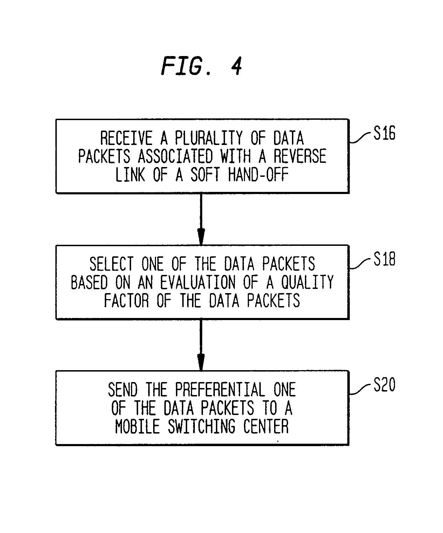

FIG. 4 is a flow chart of the method for facilitating reduction of the requisite reverse path capacity, and will be described in conjunction with the system of FIG. 3. Referring to FIG. 4, in step S16 a reverse data packet receiver 135 receives a plurality of duplicative data packets associated with a reverse link of a soft hand-off. The base stations 16 participating in a soft hand-off of a mobile station 18 transmit the data packets. The BSC 14 looks at the consolidating database 30 to determine the appropriate number and port assignments of duplicative incoming packets to be evaluated for selection of selected nonduplicative outgoing packets.

In step S18, a selector 135 selects one of the duplicative data packets based on an evaluation of a quality factor of the data packets. For example, the selector 135 may select a selected or preferential outgoing data packet out of the duplicative incoming data packets based on a signal-to-noise ratio, a signal-to-interference ratio, a symbol error rate, or another signal quality parameter associated with the duplicative signals during a given time interval.

The selector 135 is associated with a base station controller 14 which is preferably remotely located from the mobile switching center 10. In the base station controller 14, a consolidating server 26 includes the selector 135 and consolidates the duplicative incoming packets from the base stations to select selected packets based on signal quality parameters underlying the duplicative incoming packets.

The BSC 14 receives multiple copies of a reverse link transmission from the base stations 16. All of the legs participating in a soft hand-off must be received a the BSC 14 within a limited delay of each other. The BSC 14 will wait for selecting the best leg until it receives a packet from each leg. If a packet doesn't arrive for each leg, the BSC 14 may ignore the packet after the expiration of a timer. The selector 135 selects the best constituent packets of a data message or voice call.

In the context of a CDMA wireless system, the selector 135 may comprise a CDMA frame pre-selector. A frame may be considered the equivalent of a packet. The CDMA frame pre-selector processes at the AAL2 layer, and not the ATM cell layer. The ATM switch or the consolidating server removes the ATM header. A group of AAL2 packets are given to the pre-frame selector. In one embodiment, the pre-frame selector receives the AAL2 packets belonging to the soft hand-off group and determines which AAL2 packets have suffered the least noise corruption. The noise evaluation procedure may be carried out on an AAL2 packet-by-packet basis so a previous AAL2 packet may come from one leg of the soft-handoff and the next following AAL2 packet may come from another leg of the soft hand-off. The reverse packet sent to the MSC 10 may be designated as the primary leg. Although the frame pre-selector has been described as using a noise evaluation procedure to select selected data packets, the frame selector can perform an error check, monitor the bit-error rate, or frame-error rate or select the best voice quality of data packets from each base station participating in the soft hand-off. Thus, the ATM/AAL2 switching functions of the BSC result in bandwidth conservation on the links from the BSC to the MSC due to transmitting only a single AAL2 packet, rather than one data packet for each soft hand-off leg.

In step S20, a transmitter sends the preferential one or the selected data packet of the data packets to a mobile switching center over the communications line 15. In the reverse path over communications line 15 between the MSC 10 and the BSC 14, the base station controller transmits a single selected outgoing data packet for each group of incoming duplicative data packets. The selected outgoing data packet is destined for reception at a speech handler or vocoder of the mobile switching center 10.

The requisite capacity on the reverse path between the BSC 14 and the MSC 10 may be reduced by transmission of the selected data packets, as opposed to the incoming duplicative data packets from all legs of a soft hand-off. One leg of a soft hand-off may be designated a primary leg 85, whereas the other legs participating in the soft hand-off may be referred to as secondary legs 86 (FIG. 3).

The routing of the data packets on the reverse path may be accomplished in an efficient manner that minimizes data processing or introduces routing flexibility by assigning VCC's, CID's, VCI's and/or VPI's as follows. In any embodiment set forth herein, different legs of the soft hand-off could use the same BTS-MSC CID to identify a particular vocoder or speech handler in the MSC 10. In one example, a vocoder at the MSC 10 supports up to seven legs of a soft hand-off.

The BTS 16 may transmit a primary CID to the BSC 14 for forwarding to the MSC 10, without alternation of the CID in the reverse path between the BSC 14 and the MSC 10. On the reverse path, the VCI's from different base stations participating in the soft hand-off are different, but the CID's may be the same for all of the reverse packets associated with a particular soft hand-off. Thus, the data processing of the selector 135 is minimized because the selector 135 only has a choice of one CID to send to the MSC 10, which refers to the primary leg of the soft hand-off. In the context of a CDMA wireless system, the BSC may only need to process the AAL2 packets that are involved in the soft hand-off, thus resulting in less implementation complexity at the BSC.

The consolidating server 26 references the consolidating database 30 to determine the identity of the CID and VCI for the BSC to the MSC link based the identity of the CID and VCI received from the BTS for primary leg 85, the secondary legs, or both. Each CID may identify a particular channel element in a vocoder or an interface of the mobile switching center. The base station controller 14 or the mobile switching center 10 can assign any available CID designator of the mobile switching center 10 for the reverse path. Thus, in practice, the actual CID value on the BSC to MSC link may be the same or different as the BSC to BTS legs of the soft hand-off.

Three examples of distinct alternative schemes, which may be used for downstream multicasting of data packets, will now be described. In accordance with a first scheme illustrated in FIG. 5A through FIG. 5C, the MSC 10 supports one virtual channel connection (VCC) from the BTS's 16 to the MSC 10 (associated with all legs 71 of the soft hand-off)via the BSC 14. In FIG. 5A, the VCC represents a point-to-multipoint virtual connection for the simultaneous forward transmission of data packets. A virtual communications line 75 may, but need not, include an ATM switch or intermediate distribution node 72. Each data packet coming from the BTS is looked at by the BSC 14 and a soft hand-off CID is placed within the data packet to be consistent with available channel elements of vocoders in the MSC 10.

The base stations 16 participating in the soft hand-off simultaneously receive the data packets transmitted from a mobile station 18 located in a hand-off region 211. As shown each base station 16 has a hexagonal coverage area 213 for illustrative purposes; actual coverage areas of the base stations 16 may have virtually any shape and each coverage area may be different from others.

During a soft hand-off, the BSC 14 invokes the consolidating function in response to the detected receipt of incoming duplicative data packets from the BTS 16. The base stations send duplicative data packets (from multiple soft handoff legs) from the mobile switching center 10 is sent to the BSC 14 on the VCC. The BSC 14 consolidates the incoming duplicative data packets into a preferential outgoing data packet using the mapping listed in the consolidating database 30. The BSC 14 preferably includes ATM/AAL2 switching built-in to the BSC 14.

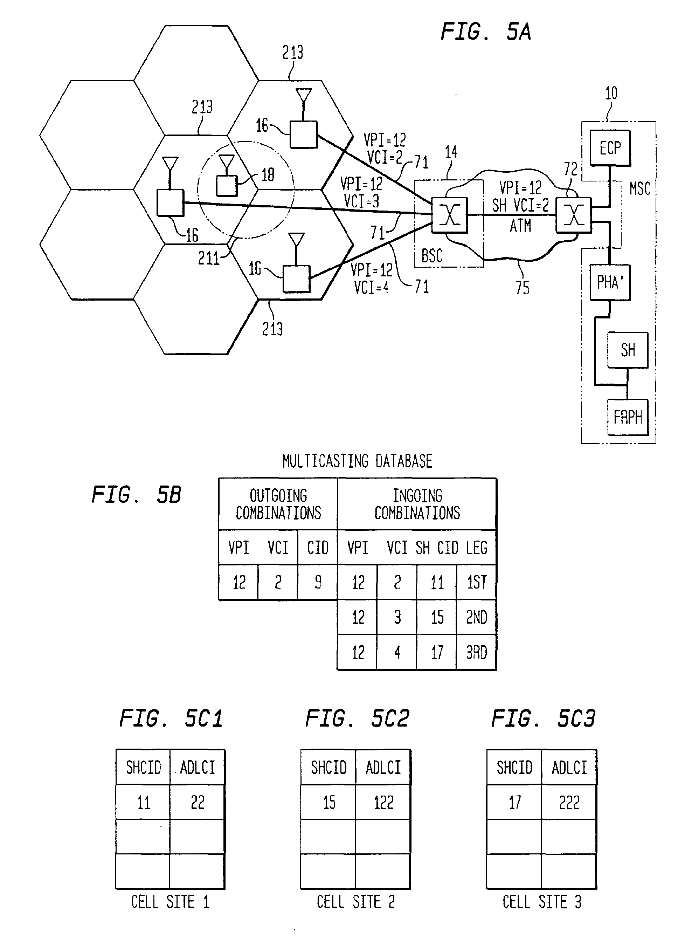

FIG. 5B shows an example of a consolidating table for storage in the consolidating database 30. The consolidating table of FIG. 5B may be used to route the data packets appropriately for a soft hand-off in accordance with the first consolidation scheme of FIG. 5A. The consolidating table of FIG. 5B includes incoming combinations that refer to the incoming values of VPI, VCI, and CID on the link between the MSC 10 and BSC 14. The consolidating table includes outgoing combinations that refer to the outgoing values, of the VPI, VCI, and CID on the three legs, participating in the soft hand-off, from the BSC 14 to a BTS 16. The consolidating table is maintained to map incoming VPI, VCI, and CID combinations to outgoing VPI, VCI, and CID combinations. For purposes of packet selection among the incoming duplicative data packets, the BSC makes use of the mapping listed in the consolidation table.

Advantageously, the incoming values and the outgoing values of VPI and VCI are identical for a primary leg of the soft-handoff and the BSC-MSC link to reduce processing at the BSC 14 at least for the primary leg. For example, as shown the MSC-BSC link and the primary leg have a VPI of two and a VCI of two, although other numbers, symbols or codes could be used to represent VPI and VCI values. Further, the outgoing combinations include a SH CID for the BTS 16 such that the BTS 16 can use the SH CID to identify the appropriate actual channel element, indicated by an actual call address, such as an actual DLCI (an actual digital logical channel indicator) stored within the base station 16. The actual DLCI may represent a channel element that was servicing a mobile station before a soft hand-off was initiated.

FIG. 5C1 through FIG. 5C3 are examples of charts of translation tables present at each base station 16 participating in the soft hand-off of FIG. 5A. The translation tables allow the base station 16 to identify the proper channel element indicated by the actual DLCI from reading the soft hand-off CID in the received, copied data packet.

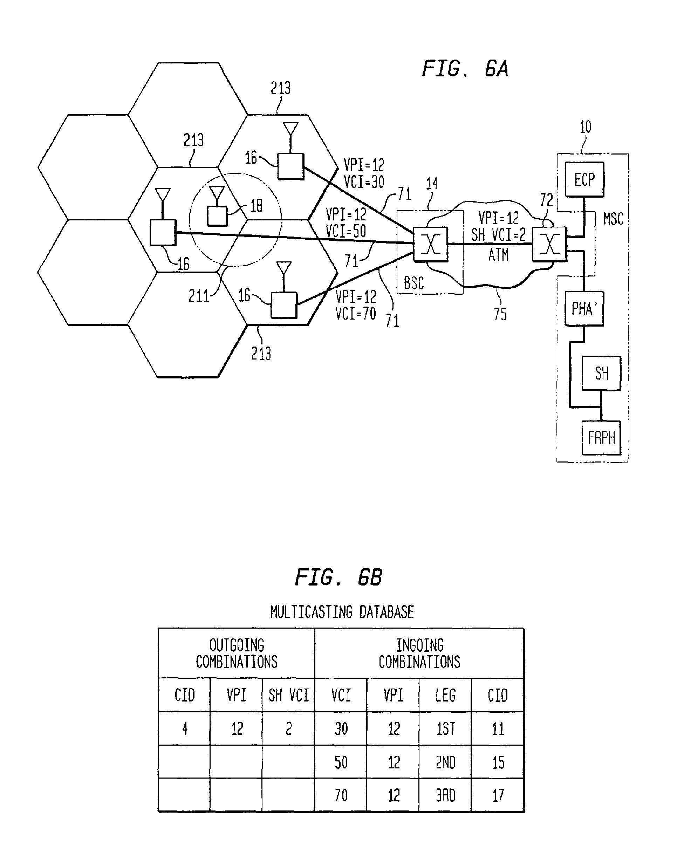

In accordance with a second consolidation scheme, FIG. 6A illustrates that the MSC 10 supports one VCC from each BTS to a BSC or more separate independent VCC's from the BSC 14 to MSC 10. The BSC 14 looks at each duplicative incoming data packet (e.g., AAL2 packet) coming from the BTS's 16. The BSC 14 invokes the consolidating function to select a preferential outgoing data packet for each group of incoming duplicative data packets.

The MSC 10 sends a single original copy of the soft handoff packet (destined for multiple soft hand-off legs) to the BSC 14 on one of the VCC's to the BSC 14. The BSC 14 makes multiple copies and sends to each BTS 16 involved in the soft handoff using the mapping listed in the consolidating table. ATM/AAL2 switching is preferably built in to the BSC 14.

FIG. 6B shows an example of a consolidating table that may be used to route the data packets appropriately for a soft hand-off in accordance with the second consolidation scheme of FIG. 6A. Like reference numbers in FIG. 5A and FIG. 6A indicate like elements.

A consolidating table is maintained for mapping incoming VPI/VCI and CID combinations to outgoing VPI/VCI and CID combinations. The consolidating table contains a map entry for incoming/outgoing combinations for each of the legs in a soft handoff. For purposes of frame or packet selection, the BSC uses mapping listed in the consolidating table.

The outgoing combinations refer to the outgoing values of VPI and VCI on the link between the MSC 10 and BSC 14. The incoming combinations refer to the incoming values, of the VPI and VCI on the three legs 71, participating in the soft hand-off, from the BSC 14 to a BTS 16. The incoming values and the outgoing values of VPI may be identical. However, the incoming and outgoing values of VCI are different because of the independent VCC's between the MSC-BSC link and the BSC-BTS links.

ATM/AAL2 switching is built into the BSC. The second scheme results in superior bandwidth savings from the BSC to the MSC as compared to the first scheme because only a single VCC is reserved or used from the BSC to the MSC for each soft hand-off. The single VCC from the BSC to MSC has a first value independent of a second value of the VCC from the BTS to the MSC. In contrast, in accordance with the first scheme each BTS reserves or uses a VCC from the BSC to the MSC such that different values of VCC's from the BSC to the MSC are associated with corresponding legs of the soft hand-off.

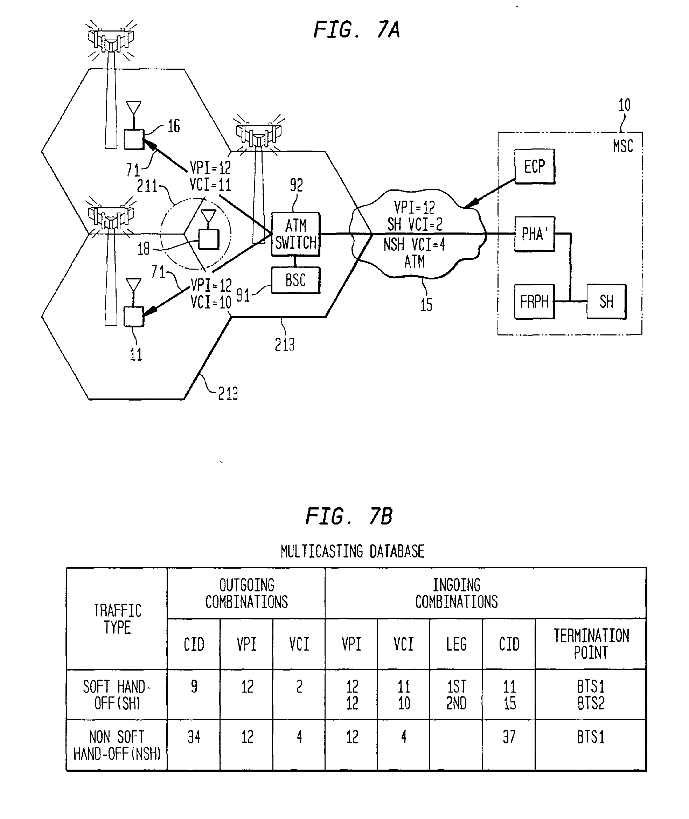

In accordance with a third consolidation scheme illustrated in FIG. 7A, an ATM switch 92 may be a separate, stand-alone version from a BSC 91 to facilitate reduced complexity of processing data packets at the site of the BSC 91. The BSC 91 contains a consolidating server, a consolidating database, and an interface for controlling the ATM switch 92. The MSC 10 supports a first VCC from the BTS 10 to the MSC 16 for non-soft hand-off connections and a separate VCC from the site of the BTS 16 to the BSC 91 for each of the legs 71 of at least one soft hand-off connection. From the BSC to the MSC, the VCC's for the soft-handoff connection have a second VCC with a value distinct from the value of the first VCC. The second VCC may have a value identical to the VCC from the BTS to the MSC for the hand-offs. That is, the direct VCC may be passed through the ATM switch 92 and the base station controller 91 without intervention or without changing a first value of the VCC between the BTS and the BSC to a second value, distinct from the first value, between the BSC and the MSC. The BSC 91 only processes the data packets (e.g., AAL2 packets) that are involved in the soft hand-off. Thus, less implementation complexity and processing of VCC's is required at the BSC 91 than might otherwise be required.

On the reverse path the base station controller 91 or the co-located ATM switch 92 assigns an outgoing VCI between the BSC and the MSC and associates the assigned outgoing VCI group of incoming VCI's for the soft hand-off traffic of each base station 16. The mobile switching center 10 may assign another VCI for non-soft hand-off traffic at each base station 16. A stream of ATM cells for different base station 16 have different VCI's. Many voice calls carried over a single base station 16 can share the same VCI. A channel identifier identifies the different voice calls for different mobile stations 18, although the voice calls may be transmitted from the same base station 16.

FIG. 7B shows an example of a consolidating table that may be used to route the data packets appropriately for a soft hand-off in accordance with the third consolidation scheme of FIG. 7A. The consolidating table of FIG. 7B includes incoming combinations that refer to the incoming values of VPI and VCI from the BSC 91 to the MSC 10. The consolidating table includes outgoing combinations that refer to the outgoing values, of the VPI and VCI on the two legs 71, participating in the soft hand-off, from the site of the BSC 91 to a BTS 16. The incoming values and the outgoing values of VPI may be identical for the soft hand-off traffic and the non soft hand-off traffic. However, the incoming and outgoing values of VCI are different for the soft hand-off traffic, than the non soft hand-off traffic, because of the independent VCC's between the MSC-BSC link and the BSC-BTS links. The incoming and outgoing values of VCI are the same for the non-soft hand-off traffic to each BTS 16.

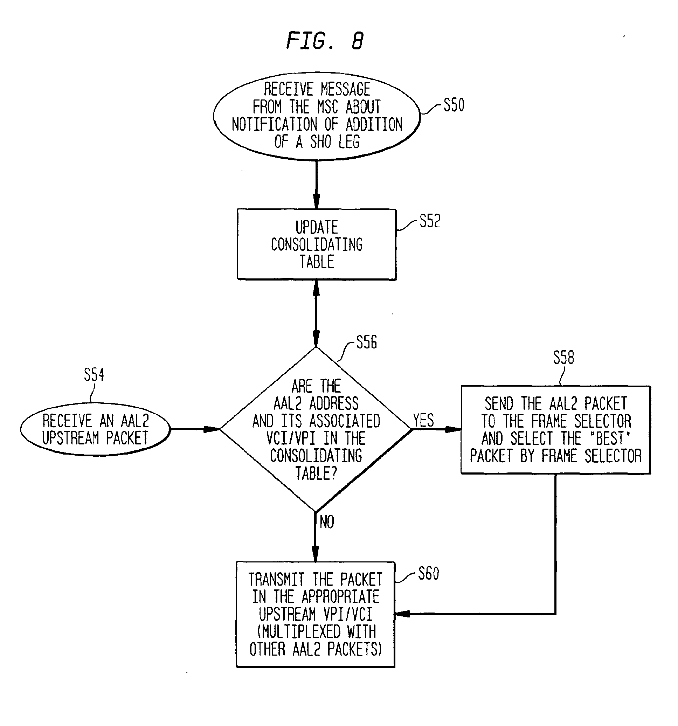

FIG. 8 is a flow chart for a method of consolidating data packets for upstream soft hand-off traffic at a base station controller 14. During soft hand-offs in the wireless system, the mobile switching center 10 determines when a soft hand-off is appropriate for a particular mobile station 18. Initially in step S50, the base station controller 14 receives a message from the MSC 10 about notification of an addition of a soft hand-off leg upon entry into a soft hand-off mode for a particular mobile station 18. In step S52, the base station controller 14 updates the consolidating database 30 consistent with the addition of one or more soft hand-off legs. Steps S50 and S52 occur independently of the other steps in FIG. 8. The dashed line between S52 and S56 represents communications associated with accessing the consolidating table.

The base station controller 14 receives a data packet (e.g., an AAL2 upstream packet) from one or more base stations 16 in step S74.

In step S56, the base station controller 14 determines whether or not the data packet address (e.g., AAL2 address) and its associated VCI/VPI for the received data packet are present in the consolidating table. If the data packet address and the VCI/VPI data are present, the method continues to- step S58. However, if the data packet address or the VCI/VPI address for the received data packet are not present, the method continues with step S80. In step S58, the base station controller 14 sends the received data packet to the frame selector to select a selected or preferential packet from among the received data packets associated with a particular mobile station engaged in a soft hand-off. Following step S58 in step S60, the base station controller 14 transmits the selected or preferential data packet in the relevant upstream VPI/VCI. The transmission of the replicated multiple data packets (e.g., AAL2 packets) may include multiplexing the selected data packets with other data packets for transmission as an ATM packet, for example.

In step S60, which may follow step S56, the base station controller 14 transmits a data packet (e.g., AAL2 packet) in the relevant upstream VPI/VCI. The transmission of the data packet may include multiplexing the replicated data packets with other data packets for transmission as an ATM packet, for example.

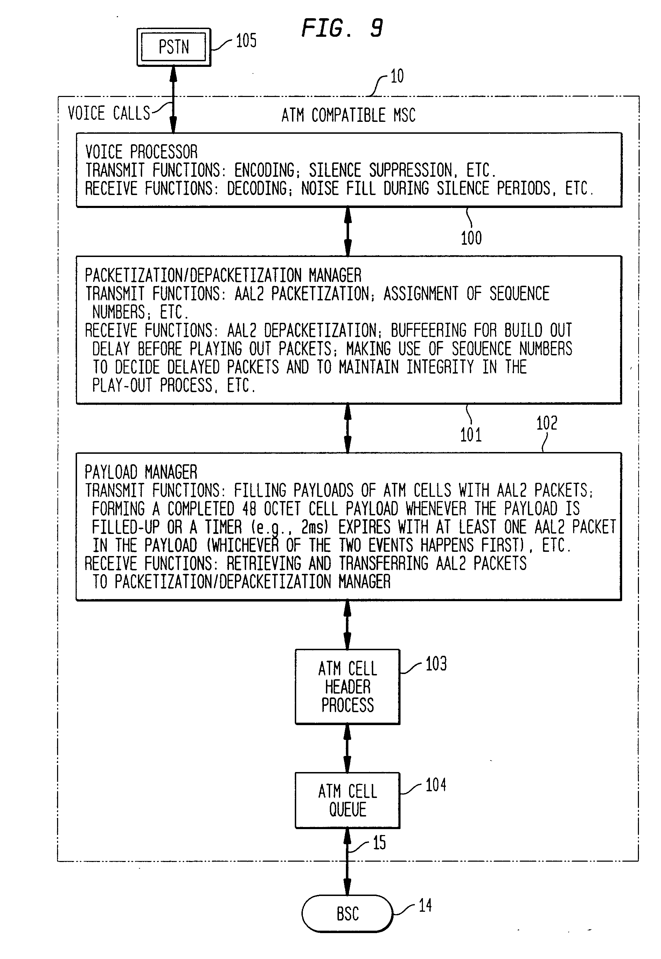

FIG. 9 illustrates the switching center 10 of FIG. 1 in more detail. The switching center 10 preferably supports an AAL2 transport mechanism and multiplexing of ATM cells. For simplicity, only certain significant data packet aspects of the mobile switching center 10 are shown in FIG. 9. In practice, the mobile switching center 10 supports other functions, such as call management and signaling messaging.

The mobile switching center 10 includes a voice processor 100 that communications with a packetization/depacketization manager 101. In turn, a payload manager communications 102 with the packetization/depacketization manager 101. The payload manager 102 is coupled to an ATM cell header processor 103 and an ATM cell queue 104 for interfacing at least-one base station controller 14. The voice processor 100 may be coupled to a public switched telephone network 105 or another communications network. The voice processor 100, packetization/depacketization manager 101, and payload manager 102 are described for functions for the reverse link. In one embodiment, the packetization/depacketization manager 101 provides AAL2 service specific convergence sublayer processing and the payload manager provides AAL2 common part sublayer processing.

For purposes of illustrating the operation of the mobile switching center 10 in the reverse link, assume that the public switched telephone network 105 carries a voice call that is communicating with a mobile station 18 in a soft hand-off. In the context of a reverse channel operation, the base station controller 14 sends an ATM data packet to the ATM cell queue 104. The ATM cell header processor 103 removes the cell header and forwards the data packet to the payload manager 102. The payload manager retrieves and transfers AAL2 packets to the packetization/depacketization manager 101. The packetization/depacketization manager 101 performs depacketization of the AAL2 data packets into a data stream. The packetization/depacketization manager 101 buffers the data stream for a build-out delay before playing out the packets for the choice processor. The packetization/depacketization manager 101 preferable uses sequence numbers to decide where to place delayed packets in a sequence of the data stream and to maintain data integrity of the play-out process. The voice processor 100 receives the data stream and decodes the data stream in a suitable fashion for transmission to a party participating a call with the mobile station 16 via the public switched telephone network 105. The voice processor 100 may suppress noise or provide noise fill during silence periods of no voice conversation.

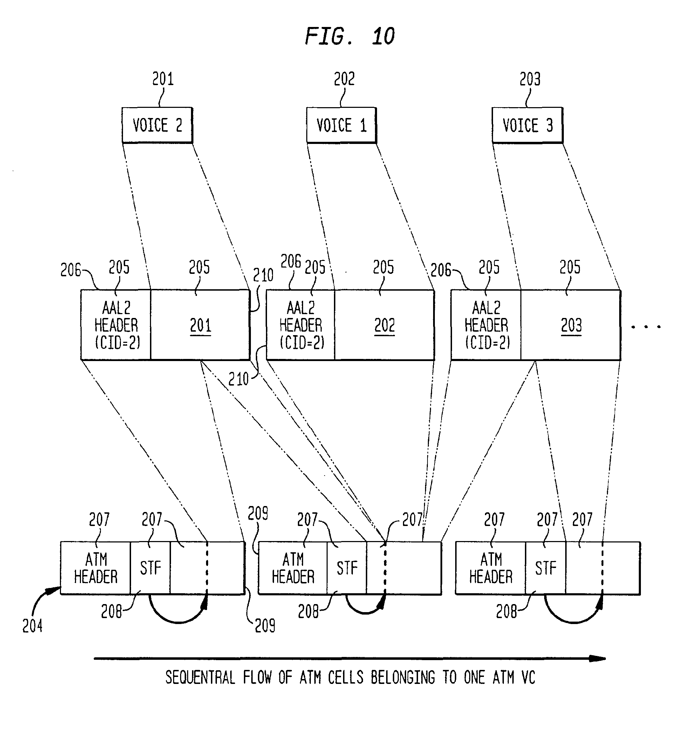

FIG. 10 illustrates a data structure employing asynchronous transfer mode (ATM), adaptation layer type 2 (AAL2), common part sublayer (CPS) together with a service specific convergence sublayer (SSCS) for carrying compressed voice over ATM. Assume the MSC 10 receives a voice signal from a public switched telephone network (PSTN) at a 64 Kbps or 56 Kbps (DS0) rate. The ATM-compatible MSC 10 may convert the voice signal into ATM packets using AAL2 for forward transmission to the base station controller 14 consistent with the data structure of FIG. 10.

Details of the AAL2 voice packetization and multiplexing are shown in FIG. 10. The voice payload units designated 201 through 203 represent information segments from different voice sources being multiplexed in one ATM voice channel 204. Although the AAL2 packets 205 represent voice information for illustrative purposes here, in other embodiments each AAL2 packet may contain a segment of a voice call, a segment of a data message, or other information (e.g., signaling data or control data). Each voice information segment is appended with an AAL2 header 206. The AAL2 header 206 may be placed in the middle of an ATM cell 207, for example. The channel ID (CID) within each AAL2 header 206 identified the voice call with which the AAL2 packet is associated.

The AAL2 packets 205 are preferably multiplexed back-to-back in the ATM cell payloads, except for one octet (e.g., first octet) or eight bits of each ATM cell 207 which is used for a start field 208 (STF). The start field 208 points to the beginning of a first AAL2 header 206 in an ATM cell 207.

AAL2 packets 205 may cross over ATM cell boundaries 209. An AAL2 packet 205 in a subsequent cell may be related to earlier data from a previous ATM cell. The AAL2 packet boundaries 210 need not match with the ATM cell boundaries. An AAL2 packet may be in the middle of payload of one ATM cell, and it may end somewhere in the payload of a subsequent ATM cell.

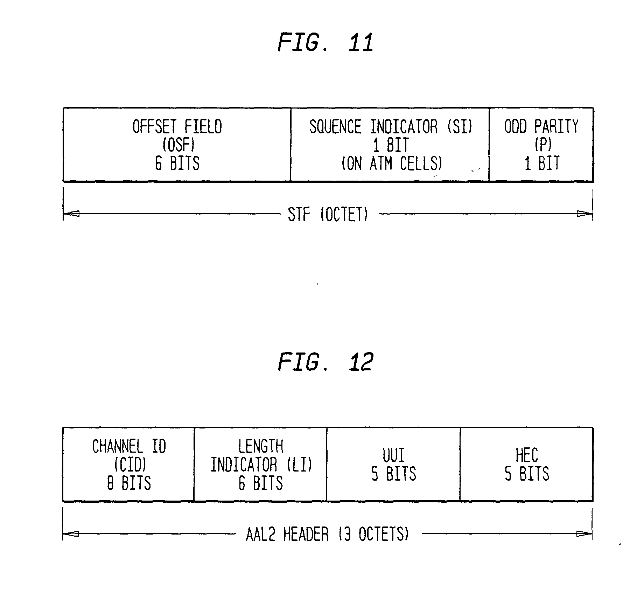

FIG. 11 illustrates an example of a start field of an ATM cell, which may be used to carry an AAL2 payload. As shown in FIG. 11, the STF octet contains a 6-bit Offset Field (OSF), one bit sequence indicator (for ATM cells of a given voice channel), and one bit for odd parity. The OSF in each cell points to the first AAL2 packet boundary in that cell. For example, the OSF value may range from a minimum value (e.g., 0) to a maximum value (e.g., 47). The OSF may be set to the minimum value if the AAL2 packet begins right next to the STF. The OSF may be set to the maximum value if there is no AAL2 packet boundary in the cell payload.

The details of the AAL2 header are shown in FIG. 12. The one octet channel ID (CID) identifies up to 248 voice connections. A six bit long length indicator (LI) provides AAL2 packet length in octets (Up to 64 octets). Five bits in the AAL2 header are designated for use as user-to-user indication (UUI). The UUI field may be used to communicate service-provider specific or proprietary messages (for each connection individually) regarding voice-coding type used and sequence numbers of AAL2 packets. Sequence numbers in AAL2 packet headers facilitate detection of delayed or lost packets in the play-out process. When a delayed or lost packet is detected in the play-out process, a fill packet is typically played out in its place. An example of a fill packet is repetition of the packet played out in the preceding packet interval.

The reason for using AAL2 in conjunction with ATM to practice the invention is as follows. ATM is geared for efficient transmission and packet stuffing at 64 KBPS voice coding rates. However, many wireless applications work at lower coding rates on the order of 8 Kbps to 14 Kbps. If a 20ms packetization interval is selected, which is generally the maximum packetization delay allowable for voice calls, the payload of an ATM cell is not filled by data provided at 14 Kbps. Accordingly, the AAL2 data protocol provides another layer of packets of smaller size than the ATM cells, such that the AAL2 packets are of variable size. Unlike ATM cells, AAL2 packets are placed back-to-back within a fixed length payload of ATM cells and can cross the boundaries of ATM cells. Each AAL2 packet has another header, besides the header provided by the ATM cell. An ATM header is compatible with placing AAL2 packets inside the ATM cell. The AAL2 facilitates the elimination of idle or empty portions of the ATM packet. Each AAL2 packet identifies the call source or destination.

The base station controller 14, the base station 16, and the mobile switching center 10 preferably include suitable receivers for reading data packets, such as ATM packets and AAL2 packets. Such a receiver receives an ATM packet containing AAL2 and decodes the ATM packet as follows. First, the receiver processes the ATM header and removes it to obtain 48 octets. The first octet is read because it contains the STF. The STF is used to find the starting position of the first AAL2 packet in the ATM packet. Starting from the first AAL2 packet the 47 octet payload is laid out sequentially in a receiver buffer memory as a byte stream. Each AAL2 packet is read to determine which voice call or data message to which the AAL2 packet should be applied. Further, the sequence of each AAL2 packet for a particular voice call or data message and the length of the voice call or data message are read. The byte stream is demultiplexed into different voice calls, data messages, or both which are forwarded to different decoders to reproduce the call. The above procedure is fairly robust because if an AAL2 data packet gets lost or corrupt, the receiver may identify the sequence number of the AAL2 data packet and complete a data recovery procedure.

Although the method and system for enhancing inter-site traffic capacity is primarily described with reference to ATM packet formats (in combination with use of AAL2 adaptation layer protocol), the invention is generally applicable to packet formats of any kind, such as, internet protocol (IP) and frame relay (FR). In an alternate embodiments, the method and system may be practiced with internet protocol data packets, AAL5 data packets, variants thereof, Generic RTP Multiplexing (GeRM) protocol, or other data packet structures.

AAL5 is an adaptation layer protocol which is most suitable for adapting voice content to ATM packets. Generic RTP Multiplexing (GeRM) protocol may be used for packetization of voice information if IP is the transport protocol for the communications line 15 or more generally for the backhaul network of the wireless communications system. GeRM is a protocol that emulates AAL2. GeRM allows for multiplexing of voice packets or mini-packets from multiple voice sources within an IP packet. Thus, GeRM helps reduce packet overhead associated with voice over IP. IP header compression may be used to further reduce overhead for voice over IP and falls within the scope of the invention.

The method and system is applicable to efficient handling of soft hand-offs for data applications and video applications as well as voice applications. If the transport protocol were IP, there is no need for an adaptation layer for data, and the efficient handling of soft-handoff for data applications will be performed at the IP layer itself.

The method and system for enhancing inter-site traffic capacity between the MSC and BSC or between the MSC and BTS, is well-suited for application to CDMA wireless systems. In a current state-of-the art CDMA wireless system, the MSC maintains separate dedicated connections for duplicative signals between the MSC and the BSC. In accordance with the invention, a single virtual connection between the BSC and the MSC is sufficient to support the forward traffic for at least one soft hand-off such that the forward traffic load may be reduced.

In a conventional soft hand-off of prior art wireless networks, the number of duplicative signals depends upon the number of legs or the number of pseudorandom noise code offsets in the active set of a soft hand-off. For example, approximately 35 percent of the capacity between the MSC and the BSC may represent traffic overhead carrying duplicative signals of various soft hand-offs in the prior art wireless network. In contrast, the invention disclosed herein can facilitate an estimated 40 percent or better reduction in requisite traffic capacity between the BSC and the MSC, assuming one or more three legged soft hand-offs and the aforementioned thirty-five percent overhead.

The specification describes various illustrative embodiments of the system and method of the invention. The scope of the claims is intended to cover various modifications and equivalent arrangements of the illustrative embodiments disclosed in the specification. Therefore, the following claims should be accorded the reasonably broadest interpretation to cover modifications, equivalent structures, and features which are consistent with the spirit and the scope of the invention disclosed herein.

## Claims

1. A method for a soft hand-off comprising:
receiving a plurality of generally duplicative incoming data packets from a mobile station associated with a reverse path of a soft hand-off;
selecting a preferential one of the duplicative incoming data packets based on an evaluation of a signal quality factor associated with the duplicative incoming data packets; and
sending the preferential one of the duplicative incoming data packets to a mobile switching center.

2. The method according to claim 1 further comprising the step of:
establishing a consolidating database to define routing of the preferential data packet to the mobile switching center from base stations participating in the soft hand-off.

3. The method according to claim 1 further comprising the step of:
establishing a consolidating database including virtual path identifiers and channel identifiers, the virtual path identifiers identifying routing of the duplicative incoming data packets and the preferential data packet between at least one base station and the mobile switching center, the channel identifiers indicating destination channel elements of vocoders of the mobile switching center.

4. The method according to claim 1 further comprising the step of:
establishing a consolidating database including incoming combinations of virtual path identifiers and virtual channel identifiers and outgoing combinations of virtual path identifiers and virtual channel identifiers, the incoming combinations defining communications between base stations participating in the soft hand-off and a base station controller, and the outgoing combinations defining communications between the base station controller and a mobile switching center.

5. The method according to claim 1 further comprising the step of:
establishing a consolidating database for defining at least one first link between base stations participating in a soft hand-off and a base station controller and defining a second link between the base station controller and the mobile switching center such that the at least one first link and the second link have independent virtual channel connections.

6. The method according to claim 1 further comprising the step of:
establishing a consolidating database for defining an incoming combination and an outgoing combination of channel identifiers and virtual path identifiers for the soft hand-off, wherein the channel identifiers are identical in the incoming combination and the outgoing combination.

7. The method according to claim 1 further comprising the step of:
establishing a consolidating database for defining an incoming combination and an outgoing combination of one or more channel identifiers and virtual path identifiers for the soft hand-off, wherein the channel identifiers are identical in the incoming combination and the outgoing combination and wherein the virtual path identifiers are identical for the incoming and outgoing combinations.

8. The method according to claim 1 further comprising the step of:
establishing a consolidating database for defining an incoming combination and an outgoing combination of one or more channel identifiers and virtual path identifiers for the soft hand-off, wherein the channel identifiers are different in the incoming combination and the outgoing combination and wherein the virtual path identifiers are identical for the incoming and outgoing combinations.

9. A system for a soft hand-off comprising:
a data packet receiver for receiving a plurality of generally duplicative incoming data packets associated with a reverse link of a soft hand-off;
a selector for selecting a preferential one of the duplicative incoming data packets based on an evaluation of a signal quality factor associated with the duplicative incoming data packets; and
a transmitter for sending the preferential one of the incoming duplicative data packets to a mobile switching center.

10. The system according to claim 9 wherein the data packet receiver and the transmitter comprise a packet switching unit.

11. The system according to claim 9 further comprising a consolidating server including the selector and a storage device for storing a consolidating database.

12. The system according to claim 9 further comprising a consolidating server including a storage device for storing a consolidating database, the consolidating database defining routing of the preferential data packet from a base station controller.

13. The system according to claim 9 further comprising a consolidating database defining routing of the preferential data packet to the mobile switching center.

14. The system according to claim 9 further comprising a consolidating database including virtual path identifiers and virtual channel identifiers; the virtual path identifiers identifying routing of the duplicative incoming data packets and the preferential data packet between at least one of the base stations and a mobile switching center and, the virtual channel identifiers indicating destination channel elements of voice handlers, participating in the soft hand-off, at the mobile switching center.

15. The system according to claim 9 further comprising a consolidating database including an incoming combination of one or more virtual path identifiers and virtual channel identifiers and an outgoing combination of one or more virtual path identifiers and virtual channel identifiers, the incoming combination defining communications between the data packet receiver and base stations of a soft hand-off, and the outgoing combination defining communications between a data packet transmitter and the mobile switching center.

16. The system according to claim 9 further comprising a consolidating database for defining a first link between the data packet receiver and base stations with independent virtual channel connections and for defining a second link between the data packet transmitter and a mobile switching center.

17. The system according to claim 9 further comprising a consolidating database for defining an incoming combination and an outgoing combination of one or more channel identifiers and virtual path identifiers, wherein the channel identifiers are identical in the incoming combination and the outgoing combination and wherein the virtual path identifiers are identical for the incoming combination and the outgoing combination.

18. A method for improving efficiency of transmission capacity between a mobile switching center and a base station controller in a wireless network, the method comprising:
receiving a group of incoming duplicative data packets at a base station controller from multiple legs of base stations participating in a soft hand-off;
consolidating the group of incoming duplicative data packets to form one representative data packet from the group; and
transmitting the representative packet from the base station controller to the mobile switching center.

19. The method according to claim 18 wherein the consolidating step forms the representative packet by a frame-selection process.

20. The method according to claim 18 wherein the consolidating step comprises an error-correction process.

21. The method according to claim 18 comprising the step of carrying voice information over the single representative data packet and the multiple incoming duplicative data packets as adaptation layer type-two packets placed within asynchronous transfer mode cells.

22. The method according to claim 18 comprising the step of carrying data information over the single representative data packet and the multiple incoming duplicative data packets as adaptation layer type five packets placed within asynchronous transfer mode cells.

23. The method according to claim 18 comprising the step of carrying data information over the single representative packet and incoming duplicative multiple packets as internet protocol packets.
